# EUROPÄISCHE PATENTSCHRIFT

(11) **EP 1 311 446 B1**
(45) Veröffentlichungstag und Bekanntmachung des Hinweises auf die Patenterteilung: **23.11.2005**
(21) Anmeldenummer: 01962623.3
(22) Anmeldetag: 09.08.2001
(51) Int. Cl.: B65G 17/08

(54) **KETTENGLIED, INSBESONDERE EINER KURVENGÄNGIGEN FÖRDERKETTE**
CHAIN LINK, ESPECIALLY OF A CURVE-NEGOTIATING CONVEYOR CHAIN
MAILLON DE CHAINE, NOTAMMENT D'UNE CHAINE DE TRANSPORT COURBE

(30) Priorität: 16.08.2000 DE 10040081
(43) Veröffentlichungstag der Anmeldung: 21.05.2003
(73) Patentinhaber: ROBERT BOSCH GMBH, 70442 Stuttgart (DE); Flexon Systemplast GmbH, 01809 Dohna (DE)
(72) Erfinder: BAIER, Wolfram, 73760 Ostfildern (DE); HETTWER, Guido, 70469 Stuttgart (DE); ROTHFUSS, Peter, 71254 Ditzingen (DE); KLEMD, Olaf, 71706 Markgroeningen (DE); JANZEN, Wolfgang, 57234 Wilnsdorf (DE); NENDEL, Klaus, 09569 Oederan (DE); MEYNERTS, Peter, 09224 Grüna (DE)
(86) Internationale Anmeldenummer: PCT/DE2001/003053
(87) Internationale Veröffentlichungsnummer: WO 2002/014189

(56) Entgegenhaltungen:
- US-A- 2 256 005
- US-A- 3 730 331
- US-A- 4 524 865
- US-A- 4 597 492
- US-A- 5 402 880

## Beschreibung

### Stand der Technik

Die Erfindung geht aus von einem Kettenglied, insbesondere einer kurvengängigen Förderkette, nach dem Oberbegriff des Anspruchs 1.

Ein derartiges, beispielsweise aus der DE 32 35 224 A1 bekanntes, Kettenglied (Oberbegriff des Anspruchs 1) weist eine Trageinrichtung zur Aufnahme von Fördergut, wie Werkstücken oder Werkstückträgern, auf. An der Trageinrichtung ist ein Kopfteil angeordnet, in dem mindestens eine Querbohrung zur schwenkbaren Lagerung eines Stifts eines ersten, dem Kopfteil benachbarten Kettenglieds ausgebildet ist. An den Kopfteil schließt sich ein ebenfalls an der Trageinrichtung angeordneter, gabelförmiger Abschnitt an, der zwei den Kopfteil eines zweiten, dem gabelförmigen Abschnitt benachbarten Kettenglieds umfassende Schenkel aufweist. In den Schenkeln sind miteinander fluchtende Querbohrungen ausgebildet. Das Kettenglied weist einen Stift auf, der in den Querbohrungen der Schenkel und dem Kopfteil des zweiten benachbarten Kettenglieds angeordnet ist. Seitlich stehen von den Schenkeln Vorsprünge zur Führung des Kettenglieds, insbesondere im Untertrum eines Führungsprofils, und zum Antrieb durch ein Antriebsrad ab. Die Querbohrungen der Schenkel verlaufen ebenfalls durch die Vorsprünge.

Da die Stifte über die ganze äußere Breite der Vorsprünge verlaufen, ist das Gewicht der Förderkette relativ hoch.

Da die Vorsprünge um den Stift angeordnet sind, haben diese wegen der Querbohrungen einen verminderten Querschnitt. Dadurch tritt an dieser Stelle eine erhöhte Kerbwirkung auf. Dies reduziert die übertragbaren Antriebskräfte.

Da der Stift weit von einer quer zur Längsmittelachse durch den Schwerpunkt verlaufenden, waagerechten Achse entfernt ist, tritt beim Führen der Förderkette im Untertrum ein Moment auf, durch das die Kettenglieder zum Kippen um diese Schwerpunktachse neigen. Dadurch tritt an den Kanten der Vorsprünge eine höhere Flächenpressung auf, wodurch der Verschleiß an den Vorsprüngen zunimmt.

An Antriebsrädern, die die Förderkette in einer Ebene umlenken, hat der Versatz zur genannten waagerechten Achse ebenfalls ein Moment zur Folge, durch das der Lauf der Förderkette unruhig werden kann. Gerade bei kleinen Antriebsrädern mit wenig Zähnen wird dadurch auch der sogenannte Polygoneffekt verstärkt. Der Polygoneffekt tritt bei jeder Förderkette auf. Je größer die Teilung und je geringer die Zähnezahl der Kettenräder, um so stärker ist der Polygoneffekt.

Bei einer aus Kettengliedern gemäß der DE 32 35 224 A1 gebildeten Förderkette hat die zylinderförmige Ausbildung der Vorsprünge insbesondere den Nachteil, dass bei den Antriebsrädern, die die Förderkette in der Ebene antreiben, nur punkt- bzw. linienförmiger Kontakt zu deren Verzahnung möglich ist und damit eine Überlastung des Kunststoffes in der Kontaktzone bzw. wesentlich größeren Verschleiß entstehen kann.

Aus der WO 99/52798 ist ein Kettenglied bekannt, bei dem die Vorsprünge an den Schenkeln unterhalb der Querbohrungen ausgebildet sind. Beim Einleiten einer Kraft durch ein Antriebsrad tritt ebenfalls ein Moment auf, das einen unruhigen Lauf zur Folge haben kann.

Demgegenüber besteht die Aufgabe der Erfindung darin, ein Kettenglied einer Förderkette der eingangs genannten Art bereitzustellen, das größere Antriebsmomente aufnehmen kann.

Erfindungsgemäß wird die Aufgabe durch die im Kennzeichen des Anspruchs 1 aufgeführten Merkmale gelöst.

### Vorteile der Erfindung

Das erfindungsgemäße Kettenglied hat den Vorteil, dass sich beim Einlauf in die Antriebsradverzahnung eine linienförmige und mit zunehmenden Drehwinkel eine flächenförmige Kontaktzone ergibt. Dadurch wird die Flächenpressung verringert, was wiederum einen niedrigeren Verschleiß nach sich zieht und die Übertragung größerer Antriebsmomente erlaubt. Außerdem läuft die Kette durch die verrundeten Vorsprünge insgesamt ruhiger.

In einer vorteilhaften Weiterbildung ist an der Unterseite der Trageinrichtung zwischen dem Stift und dem Kopfteil eine Aufnahme für ein Gewindeelement, wie eine Schraubenmutter oder eine Sechskantschraube, ausgebildet. Dadurch wird die Montage von kundenspezifischen Aufbauten an den Trageinrichtungen erleichtert.

Weitere Vorteile und vorteilhafte Weiterbildungen des erfindungsgemäßen Kettenglieds ergeben sich aus den Unteransprüchen und der Beschreibung.

### Zeichnung

Ein Ausführungsbeispiel der Erfindung ist in der Zeichnung dargestellt und in der nachfolgenden Beschreibung näher erläutert. Es zeigen:
- Figur 1: eine Draufsicht auf ein Kettenglied,
- Figur 2: eine Unteransicht nach Figur 1,
- Figur 3: eine geschnittene Seitenansicht von links gemäß den Schnittlinien III-III in Figur 1,
- Figur 4: eine geschnittene Unteransicht gemäß den Schnittlinien IV-IV in Figur 3 und
- Figur 5: eine Seitenansicht von rechts nach Figur 1.

### Beschreibung des Ausführungsbeispiels

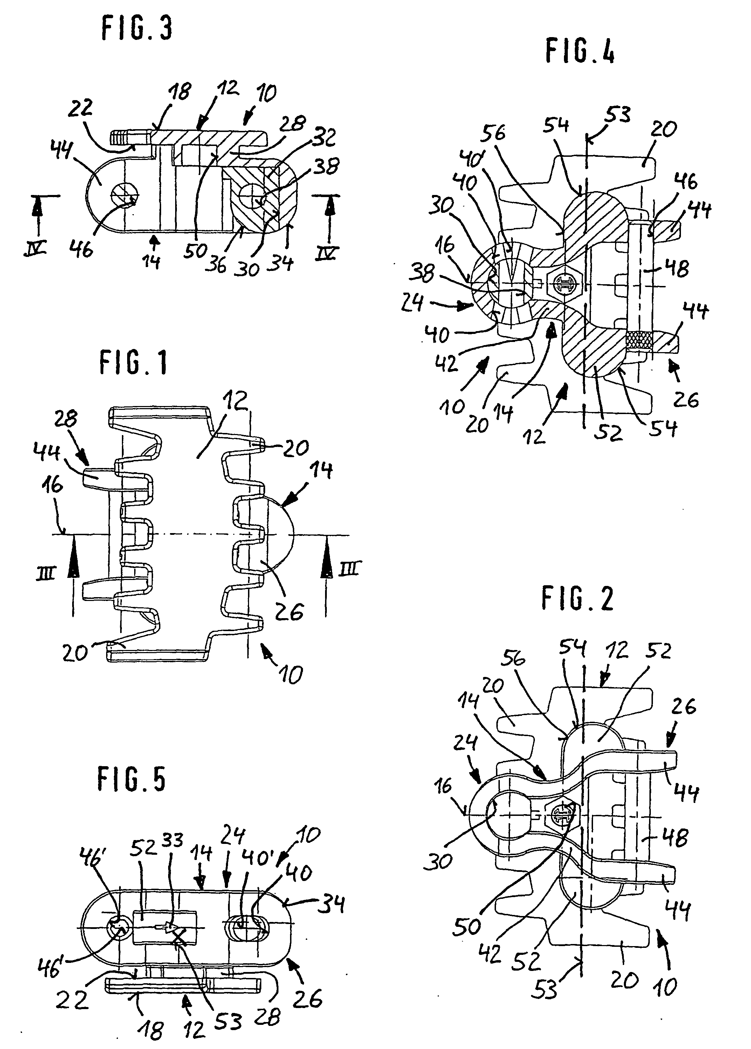

In der Figur 1 ist ein Kettenglied 10 einer kurvengängigen Förderkette gezeigt. Das Kettenglied 10 weist im wesentlichen eine Trageinrichtung 12 und einen unter der Trageinrichtung 12 angeordneten Grundkörper 14 auf, der sich entlang der mit einer strichpunktierten Linie 16 gekennzeichneten Längsmittelachse erstreckt.

Die Trageinrichtung 12 dient der Aufnahme von nicht dargestelltem Fördergut, wie Werkstücken oder Werkstückträgern. Hierzu kann die Trageinrichtung 12 - so wie dargestellt - eine flache Oberseite 18 haben oder mit speziellen Aufnahmen, Beschichtungen oder Magneten für das Fördergut versehen sein. Äußere Bereiche der Trageinrichtung 12 sind mit Fingern 20 versehen. Die Finger 20 sind so angeordnet, dass sie bei mehreren zu einer Förderkette zusammengesetzten Kettengliedern 10 ineinandergreifen. Somit entsteht einerseits eine möglichst große Fläche zur Auflage des Förderguts. Andererseits entstehen keine Stellen, an denen Körperteile, Kleidungsstücke, größere Späne, Werkstücke oder dergleichen eingeklemmt werden können.

Wie aus der Figur 2 deutlicher hervorgeht, besteht der an der Unterseite 22 der Trageinrichtung 12 angeordnete Grundkörper 14 im wesentlichen aus einem Kopfteil 24, der in einen sich daran anschließenden gabelförmigen Abschnitt 26 übergeht. Der Kopfteil 24 und der gabelförmige Abschnitt 26 sind über einen Zwischenabschnitt 28 mit einer kleineren Querschnittsfläche an der Trageinrichtung 12 angeformt.

Der Kopfteil 24 weist eine Bohrung 30 auf, die sich von der Unterseite des Kettenglieds 10 im wesentlichen senkrecht zur Trageinrichtung 12 bzw. Längsmittelachse 16 erstreckt. Vorzugsweise mündet die Bohrung 30 jedoch nicht in die Oberseite 18 der Trageinrichtung 12.

Aus der Schnittdarstellung der Figur 3 wird ersichtlich, dass in der Bohrung 30 des Kopfteils 24 ein Zapfen 32 angeordnet ist. Der Zapfen 32 ist drehbar in der Bohrung 30 gelagert. Der an der Unterseite des Kettenglieds 10 in der üblichen Förderrichtung 33 (Figur 5) gesehen vorne liegende Bereich 34 des Kopfteils 24 und der in der üblichen Förderrichtung 33 gesehen hinten liegende Bereich 36 des Zapfens 32 sind verrundet. Dadurch haben der Zapfen 32 und der Kopfteil 24, der dem Antrieb der Förderkette durch ein nicht dargestelltes Antriebsrad dienen kann, eine hierfür optimierte Form.

Wie die Schnittdarstellung der Figur 4 verdeutlicht, ist im Zapfen 32 eine Querbohrung 38 ausgebildet. In die Bohrung 30 des Kopfteils 24 münden zwei quer zur Längsmittelachse 16 verlaufende Querbohrungen 40. Die Querbohrungen 40 verbreitern sich zur Außenseite des Kopfteils 24, wobei sie in etwa parallel zur Trageinrichtung 12 verlaufen und ihre Längsachsen 40' miteinander fluchten. In der Querbohrung 38 des Zapfens 32 ist ein nicht dargestellter Stift eines - ebenfalls nicht gezeigten - ersten dem Kopfteil 24 benachbarten Kettenglieds 10 angeordnet. Der Stift verläuft durch die Querbohrungen 40 des Kopfteils 24.

Da der Zapfen 32 drehbar in der Bohrung 30 des Kopfteils 24 angeordnet ist, ist der Stift schwenkbar gelagert. Die aus mehreren Kettengliedern 10 bestehende Förderkette kann somit über ein Antriebsrad von einem Obertrum in ein Untertrum und umgekehrt umgelenkt werden. Außerdem kann die Förderkette von einem seitlich angreifenden Antriebsrad so umgelenkt werden, dass die Oberseiten 18 der Trageinrichtungen 12 der Kettenglieder 10 in einer Ebene bewegt werden. Bei diesen beiden möglichen Arten der Umlenkung der Kettenglieder 10 wird auch von einer raumgängigen oder kurvengängigen Förderkette gesprochen.

Es sind Abwandlungen denkbar, so kann der Zapfen 32 entfallen und keine Bohrung 30 im Kopfteil 24 ausgebildet sein. Dann wäre nur eine abgewandelte Querbohrung 40 nötig, die in der Mitte des Kopfteils 24 ihre engste Stelle aufweist und sich nach außen hin ebenfalls verbreitert.

Auch ist es möglich, dass die Querbohrung 40 einen gleichbleibenden Durchmesser hat. Dadurch wäre aber keine Umlenkung der Förderkette möglich, bei der die Oberseiten 18 der Trageinrichtungen 12 in einer Ebene verbleiben; es würde sich nicht mehr um eine kurvengängige Förderkette wie bei einer aus den in den Figuren gezeigten Kettengliedern 10 gebildeten Förderkette handeln.

Der gabelförmige Abschnitt 26, der sich an den Kopfteil 24 anschließt, geht in einen V-förmigen Abschnitt 42 über, an den sich zwei im wesentlichen parallel zueinander verlaufende Schenkel 44 anschließen. Die beiden Schenkel 44 umfassen den nicht dargestellten Kopfteil eines zweiten - ebenfalls nicht gezeigten - benachbarten Kettenglieds 10. In den Schenkeln 44 sind noch miteinander fluchtende Querbohrungen 46 ausgebildet.

Als weiteres Element des Kettenglieds 10 bzw. einer Förderkette ist noch ein Stift 48 vorgesehen, der in den Querbohrungen 46 der Schenkel 44 und im Kopfteil 24 des zweiten benachbarten Kettenglieds 10 angeordnet ist. Im vorliegenden Ausführungsbeispiel ist der Stift 48 in der Querbohrung 38 des Zapfens 32 drehbar gelagert und hat in den Querbohrungen 46 der Schenkel 44 einen Presssitz. Hierzu weist der Stift 48 im Bereich wenigstens einer Querbohrung 46 am Außenumfang ein Rändel auf und hat in der Querbohrung 46 außerdem einen Presssitz.

Wie noch aus der Figur 4 hervorgeht, ist an der Unterseite 22 der Trageinrichtung 12 zwischen dem Stift 48 und dem Kopfteil 24 eine Aufnahme 50 für ein nicht gezeigtes Gewindeelement ausgebildet. Im vorliegenden Ausführungsbeispiel ist die Aufnahme 50 für eine Schraubenmutter, vorzugsweise eine Sechskantmutter, ausgebildet. Es ist jedoch auch möglich, dass in der Aufnahme 50 zum Beispiel eine Sechskantschraube angeordnet wird. Hierbei verbleibt zwischen der Aufnahme 50 und der Oberseite 18 beziehungsweise der Seite der Trageinrichtung 12, auf der das Fördergut aufliegt, noch Material. Es muss lediglich ein passendes Loch für einen Schraubenbolzen gebohrt werden. Hierzu kann am Boden der Aufnahme 50 noch eine Senkung als Anbohrhilfe vorgesehen sein. Dadurch lassen sich kundenspezifische Aufbauten an der Trageinrichtung 12 leichter befestigen.

Seitlich von den Schenkeln 44 stehen flügelartig Vorsprünge 52 ab. Die Vorsprünge 52 dienen insbesondere zur Führung des Kettenglieds 10 im Untertrum eines nicht dargestellten Führungsprofils und zum Antrieb durch ein ebenfalls nicht gezeigtes Antriebsrad. An den Außenseiten der Schenkel 44 sind die Vorsprünge 52 in Förderrichtung 33 einer aus mehreren Kettengliedern 10 gebildeten Förderkette gesehen jeweils zwischen den Querbohrungen 46 der Schenkel 44 und den Querbohrungen 40 des Kopfteils 24 angeordnet. Die Vorsprünge 52 liegen so nahe wie möglich an der mit einer gestrichelten Linie angedeuteten Achse 53, die senkrecht zur Längsmittelachse 16, parallel zu den Querbohrungen 46 der Schenkel 44 und durch den Schwerpunkt des Kettenglieds 10 verläuft.

Aus der Figur 5 wird deutlich, dass die Vorsprünge 52 auf der Höhe der Längsachsen 46' bzw. 40' der Querbohrungen 46 der Schenkel 44 und der mindestens einen Querbohrung 40 beziehungsweise - wie gezeigt - der beiden Querbohrungen 40 des Kopfteils 24 angeordnet sind. Die Vorsprünge 52 schließen sich direkt an die Querbohrungen 46 der Schenkel 44 an. Die Vorsprünge 52 haben eine entlang der Längsmittelachse 16 verlaufende Erstreckung, die so bemessen ist, dass es möglichst zu keiner Berührung mit den Schenkeln des ersten benachbarten Kettenglieds 10 kommt oder höchstens bei einem minimalen Kurvenradius bei der Art der Umlenkung, bei der die Trageinrichtungen 12 in einer Ebene bewegt werden. Die Erstreckung entlang der Längsmittelachse 16 bzw. Förderrichtung 33 ist im vorliegenden Ausführungsbeispiel derart, dass von dem Randbereich der Querbohrung 46 der Schenkel 44, der den Querbohrungen 40 am nächsten liegt, die Vorsprünge 52 bis zum V-förmigen Abschnitt 42 des Grundkörpers 14 reichen. Dadurch liegen die Vorsprünge 52 so nahe wie möglich an der in der Figur 5 mit einem Kreuz angedeuteten Achse 53.

Der äußere Rand 54 der Vorsprünge 52 ist zum Eingriff in eine korrespondierende Öffnung zwischen zwei Zähnen eines seitlich angreifenden Antriebsrads, das die Förderkette - wie bereits erläutert - in einer Ebene umlenkt, verrundet. Der Rand 56 der Vorsprünge 52, der vom verrundeten Rand 54 bis zu dem V-förmigen Abschnitt 42 reicht, ist dabei vorzugsweise gerade ausgebildet. Durch den verrundeten Rand 54 ergeben sich Vorteile beim Polygoneffekt bei der angesprochenen Umlenkung der Förderkette in einer Ebene, da die Zähne des Antriebsrads günstiger gestaltet werden können. Die konvexe bzw. bogenförmige Gestaltung der in die Verzahnung der Antriebsräder eingreifenden Fläche der Vorsprünge 52 hat den Vorteil, dass sich beim Einlauf in die Verzahnung der Antriebsräder eine linienförmige und mit zunehmendem Drehwinkel eine flächenförmige Kontaktzone ergibt und somit die Flächenpressung wesentlich gemindert werden kann.

Die Vorsprünge 52 haben eine im wesentlichen gleichbleibende Dicke, die vorzugsweise größer als die Durchmesser der Querbohrungen 46 der Schenkel 44 sind; außerdem weisen die Vorsprünge 52 keine Durchbrüche auf. Dadurch wird die Kerbwirkung reduziert.

Das Kettenglied 10 hat den Vorteil, dass durch die Gestaltung der Vorsprünge 52, insbesondere bei der Krafteinleitung durch ein Antriebsrad, das an den Vorsprüngen 52 angreift, Kräfte gut eingeleitet werden können. Ungünstige Momente, die hierbei entstehen könnten, werden vermindert, da die Vorsprünge 52 möglichst nahe an der waagerechten, quer zur Längsmittelachse 16 und durch den Schwerpunkt des Kettenglieds 10 verlaufenden Achse 53 angeordnet sind. Die aus mehreren Kettengliedern 10 gebildete Förderkette hat deshalb einen ruhigen Lauf. Die Förderkette ist stabil und kann hohe Kräfte übertragen. Dennoch ist das Gewicht relativ gering.

## Patentansprüche

1. Kettenglied (10), insbesondere einer kurvengängigen Förderkette, mit einer Trageinrichtung (12) zur Aufnahme von Fördergut, wie Werkstücke oder Werkstückträger, mit einem an der Trageinrichtung (12) angeordneten Kopfteil (24) mit zwei Querbohrungen (40) zur insbesondere schwenkbaren Lagerung eines Stifts (48) eines ersten , dem Kopfteil (24) benachbarten Kettenglieds (10), mit einem sich an den Kopfteil (24) anschließenden, an der Trageinrichtung (12) angeordneten, gabelförmigen Abschnitt (26), der zwei, den Kopfteil (24) eines zweiten, dem gabelförmigen Abschnitt (26) benachbarten Kettenglieds (10) umfassende Schenkel (44) aufweist, in denen miteinander fluchtende Querbohrungen (46) ausgebildet sind, mit einem Stift (48), der in den Querbohrungen (46) der Schenkel (44) und in dem Kopfteil (24) des zweiten benachbarten Kettenglieds (10) angeordnet ist, und mit seitlich von den Schenkeln (44) abstehenden Vorsprüngen (52), insbesondere zur Führung des Kettenglieds (10) im Untertrum eines Führungsprofils und zum Antrieb durch ein Antriebsrad, wobei im Kopfteil (24) eine Bohrung (30) ausgebildet ist, in der Bohrung (30) des Kopfteils (24) ein Zapfen (32) mit einer Querbohrung (38) drehbar gelagert ist, und die zwei Querbohrungen (40) im Kopfteil (24) in die Bohrung (30) des Kopfteils (24) münden, so dass der Stift (48) des ersten benachbarten Kettenglieds (10) schwenkbar um die Längsachse (40') der Bohrung (30) des Kopfteils (24) ist, wobei der Stift (48) vorzugsweise in der Querbohrung (38) des Zapfens (32) drehbar gelagert ist und in den Querbohrungen (46) der Schenkel (44) einen Presssitz hat und wobei der Zapfen (32) vorzugsweise dem Antrieb durch ein Antriebsrad dient, **dadurch gekennzeichnet, daß** die Vorsprünge (52), in Förderrichtung (33) gesehen, jeweils zwischen den Querbohrungen (46) der Schenkel und der Querbohrungen (40) des Kopfteils (24) und auf der Höhe der Längsachsen (40', 46') der Querbohrungen (46) der Schenkel (44) und der Querbohrungen (40) des Kopfteils (24) angeordnet sind, der äußere Rand (54) der . Vorsprünge (52) zum Eingriff in eine halbkreisförmige Öffnung zwischen zwei Zähnen eines Antriebsrads, das eine Förderkette so umlenkt, dass die Trageinrichtungen (12) in einer Ebene bewegt werden, verrundet ist un die zwei Querbohrungen (40) im Kopfteil (24) sich zur Außenseite des Kopfteils (24) verbreitern.

2. Kettenglied (10) nach Anspruch 1, **dadurch gekennzeichnet, dass** die Vorsprünge (52) so nahe wie möglich an der Achse (53) liegen, die senkrecht zur Längsmittelachse (16), parallel zu den Querbohrungen (46) der Schenkel (44) und durch den Schwerpunkt des Kettenglieds (10) verläuft.

3. Kettenglied (10) nach einem der Ansprüche 1 oder 2, **dadurch gekennzeichnet, dass** sich die Vorsprünge (52) direkt an die Querbohrungen (46) der Schenkel (44) anschließen.

4. Kettenglied (10) nach einem der Ansprüche 1 bis 3, **dadurch gekennzeichnet, dass** die Vorsprünge (52) eine entlang der Längsmittelachse (16) des Kettenglieds (10) verlaufende Erstreckung haben, die so bemessen ist, dass es zu keiner Berührung mit den Schenkeln (44) des ersten benachbarten Kettenglieds (10) kommt.

5. Kettenglied (10) nach einem der Ansprüche 1 bis 4, **dadurch gekennzeichnet, dass** die Erstreckung der Vorsprünge (52) entlang der Längsmittelachse (16) so bemessen ist, dass die Vorsprünge (52) beginnend an der Querbohrung (46) der Schenkel (44) bis zu einem zwischen dem Kopfteil (24) und den Schenkeln (44) ausgebildeten, V-förmigen Abschnitt (42) des Grundkörpers (14) verlaufen.

6. Kettenglied (10) nach einem der Ansprüche 1 bis 5, **dadurch gekennzeichnet, dass** die vorzugsweise gleichbleibende Dicke der Vorsprünge (52) größer als die Durchmesser der Querbohrungen (46) der Schenkel (44) sind.

7. Kettenglied (10) nach einem der Ansprüche 1 bis 6, **dadurch gekennzeichnet, dass** an der Unterseite (22) der Trageinrichtung (12) zwischen dem Stift (48) und dem Kopfteil (24) eine Aufnahme (50) für ein Gewindeelement, vorzugsweise eine Sechskantmutter oder Sechskantschraube, ausgebildet ist, wobei zwischen der Aufnahme (50) und der Seite der Trageinrichtung (12), auf der das Fördergut aufliegt, Material verbleibt.

8. Kettenglied (10) nach einem der Ansprüche 1 bis 7, **dadurch gekennzeichnet, dass** an der Unterseite des Kettenglieds (10) der in der üblichen Förderrichtung (33) gesehen vorn liegende Bereich (34) des Kopfteils (24) und der in der üblichen Förderrichtung (33) gesehen hinten liegende Bereich (36) des Zapfens verrundet sind.

## Claims

1. Chain link (10), especially of a curve-negotiating conveyor chain, having a supporting device (12) for receiving items to be conveyed, such as work pieces or work piece carriers, having a head part (24), which is arranged in the supporting device (12) and has two transverse bores (40) for the, in particular, pivotable mounting of a pin (48) of a first chain link (10) adjacent to the head part (24), having a fork-shaped section (26), which adjoins the head part (24), is arranged on the supporting device (12), and has two limbs (44), which surround the head part (24) of a second chain link (10) adjacent to the fork-shaped section (26) and in which transverse bores (46) aligned with one another are formed, having a pin (48), which is arranged in the transverse bores (46) of the limbs (44) and in the head part (24) of the second, adjacent chain link (10), and having projections (52), which protrude laterally from the limbs, in particular for guiding the chain link (10) in the lower strand of a guide profile and for the driving by means of a driving wheel, with a bore (30) being formed in the head part (24), a journal (32) having a transverse bore (38) being mounted rotatably in the bore (30) of the head part (24), and the two transverse bores (40) in the head part (24) opening in the bore (30) of the head part (24), so that the pin (48) of the first adjacent chain link (10) is pivotable about the longitudinal axis (40') of the bore (30) of the head part (24), the pin (48) preferably being mounted rotatably in the transverse bore (38) of the journal (32) and having a press fit in the transverse bores (46) of the limbs (44), and the journal (32) preferably being used for the driving by means of a driving wheel, **characterized in that** the projections (52), as seen in the conveying direction (33), are in each case arranged between the transverse bores (46) of the limbs and the transverse bores (40) of the head part (24) and level with the longitudinal axes (40', 46') of the transverse bores (46) of the limbs (44) and of the transverse bores (40) of the head part (24), the outer edge (54) of the projections (52) being rounded for engagement in a semicircular opening between two teeth of a driving wheel which deflects a conveying chain in such a manner that the supporting devices (12) are moved in a plane, and the two transverse bores (40) in the head part (24) widen to the outside of the head part (24).

2. Chain link (10) according to Claim 1, **characterized in that** the projections (52) lie as close as possible to the axis (53) which runs perpendicular with respect to the longitudinal central axis (16), parallel to the transverse bores (46) of the limbs (44) and through the centre of gravity of the chain link (10).

3. Chain link (10) according to either of Claims 1 and 2, **characterized in that** the projections (52) directly adjoin the transverse bores (46) of the limbs (44).

4. Chain link (10) according to one of Claims 1 to 3, **characterized in that** the projections (52) have an extent which runs along the longitudinal central axis (16) of the chain link (10) and is dimensioned in such a manner that there is no contact with the limbs (44) of the first, adjacent chain link (10).

5. Chain link (10) according to one of Claims 1 to 4, **characterized in that** the extent of the projections (52) along the longitudinal central axis (16) is dimensioned in such a manner that the projections (52) run starting at the transverse bore (46) of the limbs (44) as far a V-shaped section (42) of the basic body (14), which section is formed between the head part (24) and the limbs (44).

6. Chain link (10) according to one of Claims 1 to 5, **characterized in that** the preferably uniform thickness of the projections (52) is greater than the diameters of the transverse bores (46) of the limbs (44).

7. Chain link (10) according to one of Claims 1 to 6, **characterized in that** a mount (50) for a threaded element, preferably a hexagon nut or a hexagon head screw, is formed on the lower side (22) of the supporting device (12) between the pin (48) and the head part (24), with material remaining between the mount (50) and that side of the supporting device (12) on which the item to be conveyed rests.

8. Chain link (10) according to one of Claims 1 to 7, **characterized in that** on the lower side of the chain link (10), that region (34) of the head part (24) which is situated in front, as seen in the customary conveying direction (33), and that region (36) of the journal which is situated at the rear, as seen in the customary conveying direction (33), are rounded.

## Revendications

1. Maillon (10) notamment pour une chaîne transporteuse décrivant des courbes, comprenant
- une installation de support (12) pour recevoir des produits à transporter tels que des pièces ou des supports de pièces,
- une partie de tête (24) prévue sur l'installation de support (12) et ayant deux perçages transversaux (40) notamment pour recevoir de manière pivotante une broche (48) d'un premier maillon (10) voisin de la partie de tête (24),
- un segment (26) en forme de fourche adjacent à la partie de tête (24), prévu sur l'installation de support (12) et ayant deux branches (44) entourant la partie de tête (24) d'un second maillon (10) voisin du segment (26) en forme de fourche, les branches ayant des perçages transversaux (46) alignés,
- une broche (48) installée dans les perçages transversaux (46) des branches (44) et dans la partie de tête (24) du second maillon voisin (10) et
- des parties en saillie (52) s'écartant latéralement des branches (44) notamment pour guider le maillon de chaîne (10) dans le brin inférieur d'un profil de guidage et pour être entraînées par une roue motrice,
- un perçage (30) réalisé dans la partie de tête (24) recevant à rotation un tourillon (32) ayant un perçage transversal (38) et les deux perçages transversaux (40) de la partie de tête (24) débouchant dans le perçage (30) de la partie de tête (24) de façon que la branche (48) du premier maillon voisin (10) soit articulée autour de l'axe longitudinal (40') du perçage (30) de la partie de tête (24),
- la broche (48) montée à rotation de préférence dans le perçage transversal (38) du tourillon (32) ayant un siège pressé dans les perçages transversaux (46) des branches (44) et
- le tourillon (32) servant de préférence à l'entraînement par une roue d'entraînement,
**caractérisé en ce que**
les parties en saillie (52), vues dans la direction de transport (33) se trouvent chaque fois entre les perçages transversaux (46) des branches et les perçages transversaux (40) de la partie de tête (24), et à la hauteur des axes longitudinaux (40', 46') des perçages transversaux (46) des branches (44) et des perçages transversaux (40) de la partie de tête (24), le bord extérieur (54) des parties en saillie (52) est arrondi pour venir en prise dans une ouverture semi-circulaire entre deux dents d'une roue d'entraînement qui dévie une chaîne transporteuse pour que les installations de support (12) soient déplacées dans un plan, et les deux perçages transversaux (40) s'élargissent dans la partie de tête (24) vers le côté extérieur de la partie de tête (24).

2. Maillon (10) selon la revendication 1,
**caractérisé en ce que**
les parties en saillie (52) sont aussi proches que possible de l'axe (53) qui, perpendiculaire à l'axe longitudinal médian (16) et parallèle aux perçages transversaux (46) des branches (44), passe par le centre de gravité du maillon (10).

3. Maillon (10) selon l'une des revendications 1 ou 2,
**caractérisé en ce que**
les parties en saillie (52) font directement suite aux perçages transversaux (46) des branches (44).

4. Maillon (10) selon l'une des revendications 1 à 3,
**caractérisé en ce que**
les parties en saillie (52) ont, le long de l'axe longitudinal médian (16) du maillon (10), une extension dimensionnée pour qu'il n'y ait pas de contact avec les branches (44) du premier maillon voisin (10).

5. Maillon (10) selon l'une des revendications 1 à 4,
**caractérisé en ce que**
l'extension des parties en saillie (52) suivant l'axe longitudinal médian (16) est dimensionnée pour que les parties en saillie (52) en commençant au perçage transversal (46) des branches (44) arrivent jusqu'à un segment (42) en forme de V du corps de base (14), entre la partie de tête (24) et les branches (44).

6. Maillon (10) selon l'une des revendications 1 à 5,
**caractérisé en ce que**
l'épaisseur de préférence constante des parties en saillie (52) est supérieure au diamètre des perçages transversaux (46) des branches (44).

7. Maillon (10) selon l'une des revendications 1 à 6,
**caractérisé en ce que**
le côté inférieur (22) de l'installation de support (12) comporte entre la broche (48) et la partie de tête (24), un logement (50) pour un élément fileté, de préférence un écrou à six pans, une vis à six pans, et entre le logement (50) et le côté de l'installation de support (12) il subsiste de la matière sur laquelle s'appuie le produit transporté.

8. Maillon (10) selon l'une des revendications 1 à 7,
**caractérisé en ce que**
la zone (34) située en avant du côté inférieur du maillon (10) lorsqu'on regarde dans la direction habituelle de transport (33) de la partie de tête (24) et la zone (36) du tourillon qui se situe à l'arrière lorsqu'on regarde dans la direction de transfert habituelle (33) sont arrondies.
